# EUROPEAN PATENT APPLICATION

(11) **EP 1 653 341 A2**
(43) Date of publication of application: **03.05.2006**
(21) Application number: 05255549.7
(22) Date of filing: 09.09.2005
(51) Int. Cl.: G06F 3/12

(54) **Printing method using ordering file, and print system, image supply device and print device employing the method**

(30) Priority: 02.11.2004 KR 2004088171
(71) Applicant: Samsung Electronics Co., Ltd., Suwon-si, Gyeonggi-Do (KR)
(72) Inventor: Rhim, Eun-hee, Yeongtong dong Suwon-si Gyeonggi-do (KR); Ryu, Seok, Suwon-si Gyeonggi-do (KR)
(74) Representative: Brandon, Paul Laurence

(57) **Abstract**

A method of printing a captured image file using an ordering file includes: receiving selection information for selecting a file to be printed from among image files, multimedia files, or combinations of these files, and print control information for the selected file, input by a user; generating the ordering file using a markup language based on the input selection information and print control information; and transmitting the generated ordering file to a printing device through a predetermined interface. The printing method may further include: parsing the transmitted ordering file and printing the selected file in the printing device. Accordingly, an XML-based ordering file defining multiple pages of printing jobs for direct printing or batch printing can be generated and transmitted or transferred in a variety of ways, and in particular, multimedia files and style information as well as image files can be processed.

## Description

The present invention relates to methods of printing a captured image file, and printing systems, image supply devices, and printing devices employing the method.

Recently, devices that capture digital images, such as digital still cameras (DSCs), and mobile phones or personal digital assistants (PDAs) with embedded digital cameras, have become increasingly popular. Images captured using such devices can be edited or stored by using an IT device such as a computer. Hereinafter, such a digital image capturing device, or an information technology (IT) device, will be referred to as an image supply device.

Meanwhile, demand for printing captured images has been increasing. After an image supply device captures a digital image and stores it in a storage medium such as a memory card, the stored image is transmitted to a printing device and printed according to one of the following methods.

In a first method, the image supply device is directly connected to the printing device through an interface such as a universal serial bus (USB) or a Bluetooth (a trademark of Bluetooth SIG, Inc.) interface, and the image is transmitted from the image supply device to the printing device and printed. In a second method, the storage medium, such as a memory card, storing the image is inserted into the printing device and the image is transferred from the storage medium to the printing device and printed. The first method is referred to as direct printing and the second method is referred to as batch printing.

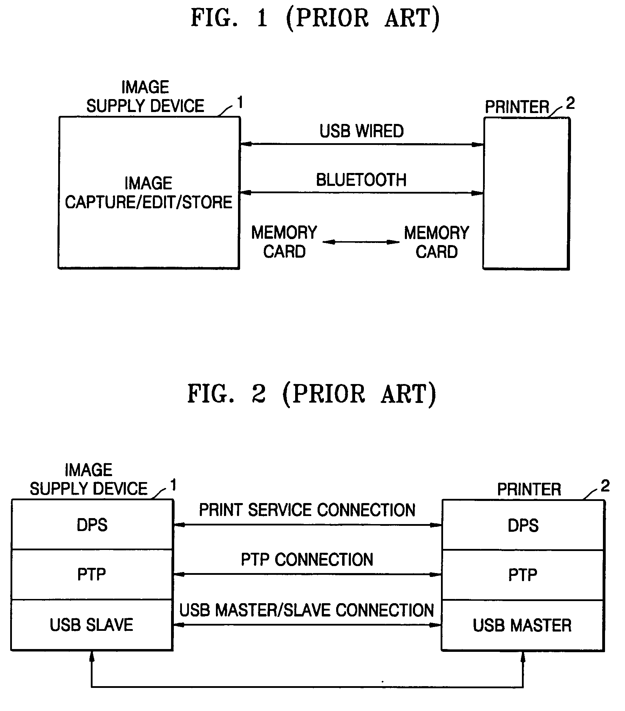

FIG. 1 illustrates a conventional interface for printing an image file. Referring to FIG. 1, an example of direct printing using a USB or Bluetooth interface and an example of batch printing using a memory card are shown.

In the case of direct printing, images are printed one-by-one using a USB cable or a Bluetooth interface. Meanwhile, in the case of batch printing, information on a series of image files to be printed and printing options are recorded in a storage medium, such as a memory card, which is then inserted into the printing device in order to print the series of image files.

In 2003, the Camera & Image Products Association (CIPA) suggested a USB interface standard called PictBridge (a trademark) to enable direct printing. Currently, many image supply devices and printing devices employ PictBridge standard technology and provide a direct printing service. However, since generally only jpg-like image files can be processed using the PictBridge standard, multimedia data such as hypertext in which an image and text are mixed cannot be processed.

FIG. 2 illustrates an example of direct printing using a USB interface.

Referring to FIG. 2, the structure of a PictBridge protocol for printing using a USB interface is formed with 3 layers, including a direct-print service (DPS) layer confirming connection between an image supply device 1 and a printing device 2, a picture transfer protocol (PTP) layer transmitting information required to provide the printing service, and a USB master/slave layer controlling connection through a USB cable.

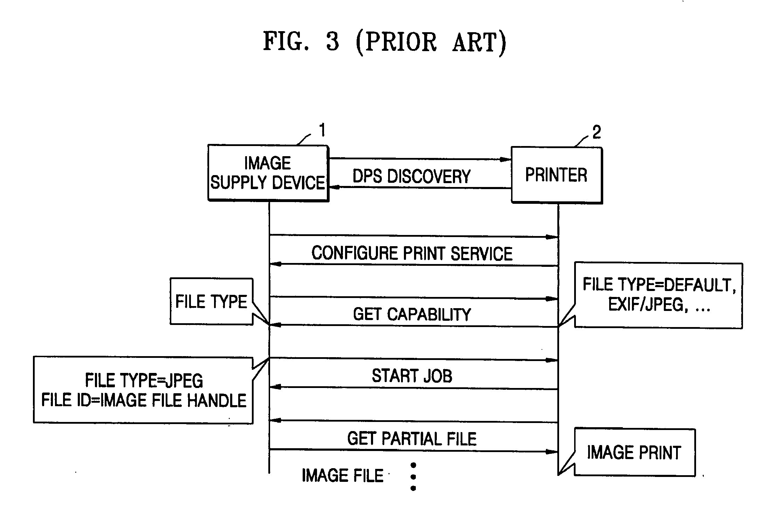

FIG. 3 illustrates a conventional process for transmitting an image file for direct printing using the PictBridge protocol.

First, an image supply device 1 and a printing device 2 are directly connected through an interface apparatus, that is, through a USB port, and then it is confirmed whether a direct printing service is provided (DPS Discovery). If it is confirmed that the direct printing service is provided, the printing device 2 transmits information about its own configuration to the image supply device 1 (Configure Print Service). The transmitted information includes printable types, sizes of paper, special effects, and so on.

Meanwhile, the image supply device 1 confirms whether the type of an image file to be printed is supported by the printing device 2 (Get Capability).

If the image file to be printed is supported by the printing device 2, corresponding image file information, that is, information on a file handle or a file name, is transmitted to the printing device 2 (Start Job). By using the received image file information, the printing device 2 fetches corresponding data from the image supply device 1 and prints it (Get Partial File). Through the process described above, direct printing service can be provided.

If the direct printing service described above cannot be used, a batch printing service can be used with a memory card. In order to print an image or display an image on a screen, a storage medium such as a memory card can mark an image file to be output in the storage medium and define printing rules for the marked file. Such marking of a file to be printed and defining of printing rules is referred to as print ordering, and a file generated as a result of print ordering is referred to as an ordering file. A leading example of a conventional ordering file format is a digital photo order format (DPOF).

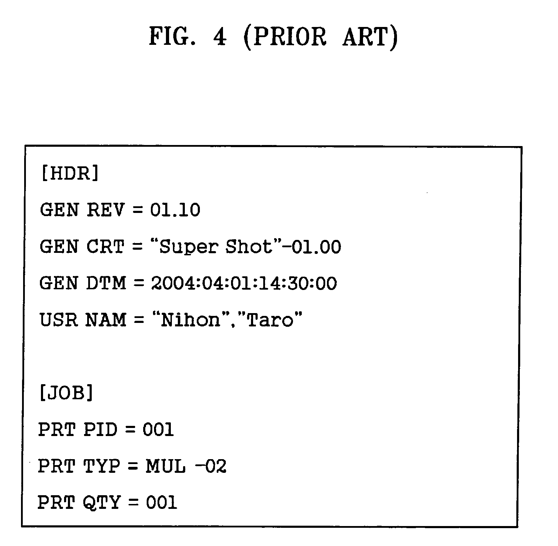

FIG. 4 illustrates a conventional ordering file format for batch printing.

Referring to FIG. 4, an example of an ordering file complying with the DPOF standard is shown. An image supply device 1 generates an ordering file complying with the DPOF standard by using information on an image file to be printed and printing control information such as the number of prints, the print space, etc.

According to the DPOF standard, a generated ordering file is stored at "path=root/misc/print.mrk". The moment a detachable storage medium such as a memory card storing the ordering file is inserted into a printing device, the printing device finds the ordering file, parses the content indicated by the ordering file, and prints an image according to the parsed information. Thus, an image supply device generates an ordering file defining a plurality of image print jobs and records the ordering file in a detachable storage medium, and by inserting the detachable storage medium into the printing device, the ordering file is transferred. The printing device reads and parses the ordering file from a predefined directory, reads an image file to be printed based on the parsing, and prints the image file.

With improvements in the performance of image supply devices, demand for printing an image combined with a background, or printing an image together with a digital character, has increased. Also, in the case of image supply devices such as mobile phones with an embedded camera function, there is an emerging demand for services to output multimedia information and text together. Examples of such services include a short message service (SMS) via which short messages can be transmitted, a multimedia message service (MMS) such as photo mail, and a personal information message service (PIMS) for transmitting a personal information message.

However, in the case of the conventional direct printing and batch printing technology described above, only image files can be processed, not multimedia data such as hypertext in which an image and text are combined. Also, as shown in FIG. 4, a conventional ordering file is generated by using a limited number of keywords such that a variety of print information items desired by a user cannot be expressed and flexibility of the ordering file is lowered.

Furthermore, when an image supply device generates information corresponding to a plurality of multimedia data pages to be printed all at once, according to the conventional printing technology, each image or multimedia data item must be individually selected and a print command for printing one page must be repeatedly given until every print job is finished. In this case, an image supply device cannot provide other functions until execution of each print command is completed. Thus, it is very inconvenient for a user wanting to use other functions.

Preferred embodiments of the present invention aim to provide a method of generating a print ordering file for a captured image including multimedia data and using the print ordering file to print the captured image.

Preferred embodiments of the present invention aim to provide a printing system for printing a captured image including multimedia data, and an image supply device and a printing device are included in the printing system.

According to an aspect of the present invention, there is provided a printing method including: receiving selection information for selecting a file to be printed from among image files, multimedia files, or combinations of these files, and print control information for the selected file, input by a user; generating an ordering file using a markup language based on the input selection information and print control information; and transmitting the generated ordering file to a printing device through a predetermined interface.

The method may further include parsing the transmitted ordering file and printing the selected file in the printing device.

The selected file may be a multimedia file described by a markup language.

The multimedia file further may include a linked image and/or style information.

The ordering file may be described by using elements and attributes complying with a markup language standard.

The ordering file may include mark information on image files, multimedia files, or combinations of these files to be printed and print control information on the marked file.

The print control information may include at least one information item selected from an area of a screen to be printed, a number of prints, an image or style information linked to a multimedia file, a handle for transmitting a file, a size of an image to be printed, information on whether to rotate an image, information on whether to adjust color, information on whether to adjust the size, information on a center location, resolution, and print quality.

The predetermined interface may be an interface which is used by inserting an image supply device recognized as USB storage device directly into the printing device.

The predetermined interface may be a detachable storage medium such as a memory stick or a memory card.

The predetermined interface may be a Bluetooth interface or a Wi-Fi interface for a wireless local area network.

The predetermined interface may be a USB interface using a USB cable.

According to another aspect of the present invention, there is provided an image supply device including: a user interface which receives selection information for selecting a file to be printed from among image files, multimedia files, or combinations of these files, and print control information for the selected file, input by a user; an ordering file generation unit which generates an ordering file using a markup language based on the input selection information and print control information; and a transmission unit which transmits the generated ordering file to a printing device through a predetermined interface.

According to still another aspect of the present invention, there is provided a printing device including: a reception unit which receives an ordering file including mark information on image files, multimedia files, or combinations of these files to be printed and print control information for the marked files, from an image supply device through a predetermined interface; and a print control unit which parses the received ordering file and prints the marked files according to the print control information.

According to a still further aspect of the present invention, there is provided a printing system for transmitting an image from an image supply device to a printing device and printing the image, the printing system including: a predetermined interface unit which connects the image supply device and the printing device; a transmission unit which transmits an ordering file including mark information on image files, multimedia files, or combinations of these files to be printed, and print control information on the marked files, through the predetermined interface unit; and a printing unit which parses the ordering file transmitted by the transmission unit and prints the marked files according to the print control information.

The predetermined interface unit may include at least one of an interface which is used by inserting an image supply device recognized as a USB storage device directly into the printing device, a detachable storage medium such as a memory stick or a memory card, a Bluetooth interface or a Wi-Fi interface for a wireless local area network, and a USB interface using a USB cable.

The present invention will become more apparent by describing in detail exemplary embodiments thereof with reference to the attached drawings in which:
FIG. 1 illustrates a conventional interface for printing an image file;
FIG. 2 illustrates an example of direct printing using a USB interface;
FIG. 3 illustrates a conventional process for transmitting a file for direct printing;
FIG. 4 illustrates a conventional ordering format for batch printing;
FIG. 5 illustrates the structure of an image supply device which generates an ordering file according to an exemplary embodiment of the present invention;
FIG. 6 illustrates an example of an ordering file according to an exemplary embodiment of the present invention and exemplary applications of the ordering file;
FIG. 7 illustrates a process for transmitting an ordering file according to an exemplary embodiment of the present invention;
FIG. 8 illustrates an ordering file according to an exemplary embodiment of the present invention;
FIG. 9 illustrates an interface for printing an image file or a multimedia file according to an exemplary embodiment of the present invention; and
FIGS. 10A and 10B are flowcharts of methods of generating an ordering file according exemplary embodiments of to the present invention.

The present invention will now be described more fully with reference to the accompanying drawings, in which exemplary embodiments of the invention are shown.

The present invention provides a method of generating an extensible markup language (XML)-based ordering file defining a print job of a plurality of pages for direct printing or batch printing and transmitting or transferring the generated ordering file in a variety of ways. In particular, the present invention provides a method of transmitting an ordering file capable of processing a multimedia file and style information, as well as an image file.

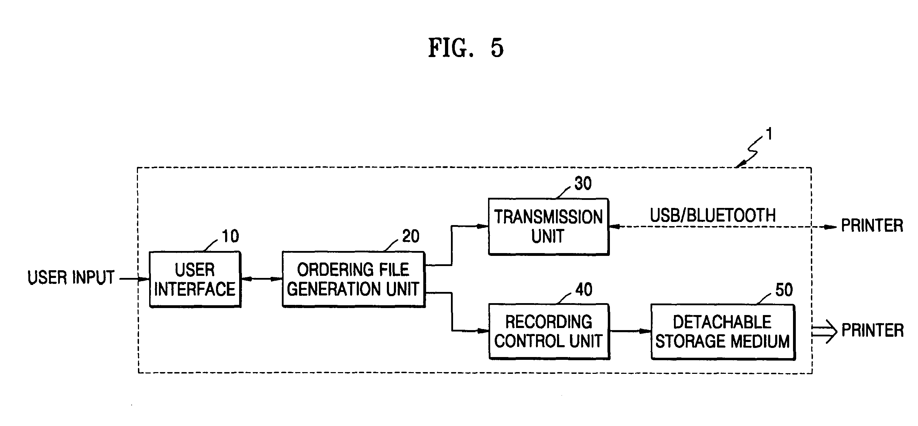

FIG. 5 illustrates the structure of an image supply device generating an ordering file according to an exemplary embodiment of the present invention.

Referring to FIG. 5, an image supply device 1 includes a user interface 10, an ordering file generation unit 20, a transmission unit 30, and a recording control unit 40.

The user interface 10 receives selection information for selecting an image file or multimedia file to be printed and related print control information from a user. According to the kind of image supply device, such as an image capture device, a device for editing the image, or a personal portable terminal providing SMS, MMS, or PIMS service, various types of information to be printed can be selected by user manipulation.

The ordering file generation unit 20 generates an ordering file based on the input selection information and print control information. Preferably, but not necessarily, the ordering file is described by using a markup language such as XML.

The transmission unit 30 connects the image supply device 1 and a printing device 2 (e.g., a printer) through an interface, such as a USB or Bluetooth interface, in order to perform print jobs. A generated ordering file can be transmitted to the printing device 2 through the connection. In order to transmit the ordering file, the conventional standard for direct printing may be used.

The recording control unit 40 may record the ordering file in a detachable storage medium 50 instead of performing direct printing through the transmission unit 30. The detachable storage medium in which the ordering file is recorded can be inserted into the printing device 2 such that a print job is performed based on the ordering file.

Meanwhile, the printing device 2 includes a module (not shown) that parses a received ordering file and forms a print job, and a module (not shown) that reads an image file or multimedia file to be printed according to the formed print job, and performs the print job. Also, a module (not shown) that transmits information on a printing state or an error that occurs during printing to the image supply device 1 can further be included.

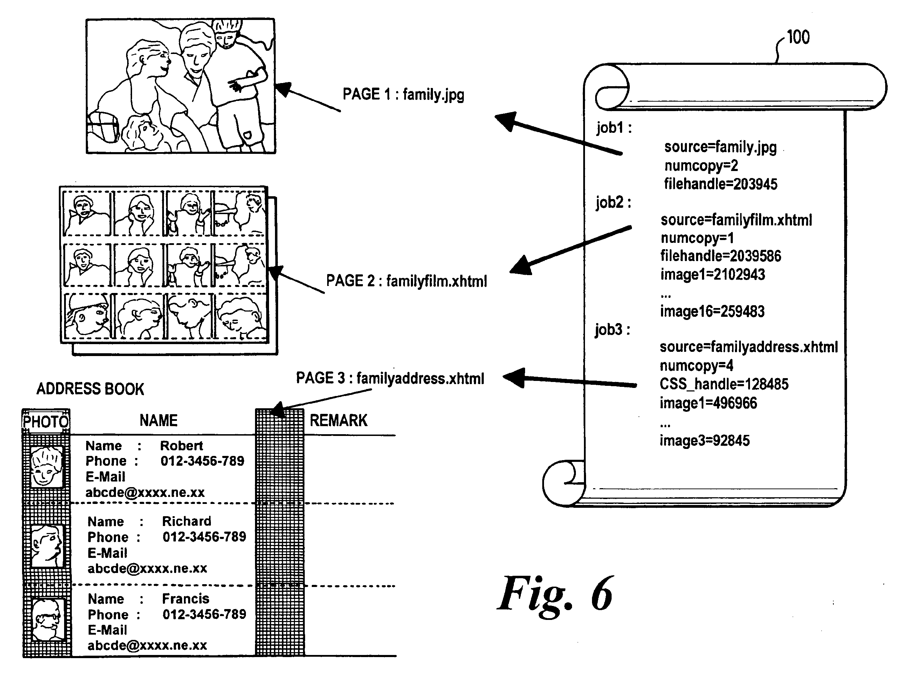

An ordering file according to an exemplary embodiment of the present invention will now be explained in more detail with reference to FIG. 6.

Referring to FIG. 6, an ordering file 100 according to the exemplary embodiment of the present invention and three exemplary applications of the ordering file 100 are shown. In the shown exemplary embodiment, three print jobs for printing three pages are defined. The first print job defines printing two copies of an image file named "family.jpg". The second print job defines printing one copy of a multimedia file named "familyfilm.xhtml" and specifies the handle of each image file to be printed. As the corresponding print result on the left hand side, it can be seen that a plurality of image files are printed in the form of an index. The third print job defines printing of an image file together with personal information by using a multimedia file named "familyaddress.xhtml". In the case of an image supply device such as a PDA, personal information such as a stored address book can be combined with captured image files and printed, for example, in the form of an address book with pictures on the left hand side. Here, style information defined in a CSS_handle is applied to a layout to be printed. That is, it is linked to a style sheet such as a cascade style sheet (CSS) and the corresponding style is applied.

The ordering file 100, according to the exemplary embodiment of the present invention, can specify as a source file for a print job: an ordinary image file; a file formed with an image described by the extensible hypertext markup language (XHTML), a synthesized image or a combination of these; and a file described by the XHTML and linked to style information such as the CSS for a detailed screen structure or with inserted style information; etc. While the conventional print technologies can process only image files, the ordering file 100 according to the exemplary embodiment of the present invention can process a variety of multimedia files as well as image files.

Also, the ordering file 100, according to the exemplary embodiment of the present invention can specify as print control information: an area of the screen to be printed, a number of prints, image or style information linked to a source file to be printed, a file handle (e.g., a PTP file handle) for transmitting a file linked to a source file to be printed, a size of an image to be printed or a linked image, information on whether to rotate the image, information on adjusting color, information on adjusting size, information indicating the center, etc., a resolution of the image to be printed or a linked image and print quality information, and other general printing-related option information. This information can be input by a user into the user interface 10 shown in FIG. 5.

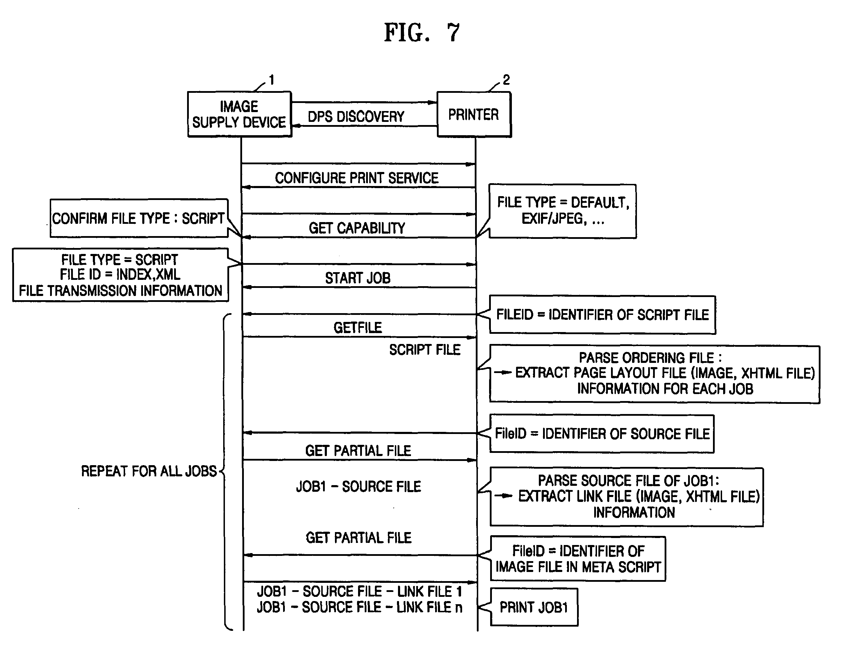

Meanwhile, the generated ordering file 100 may be transmitted to the printing device 2 through a process illustrated in FIG. 7.

Referring to FIG. 7, first, the image supply device 1 and the printing device 2 are connected using an interface such as USB or Bluetooth, and then it is confirmed whether a direct printing service is provided (DPS Discovery). If it is confirmed that direct printing service is provided, the printing device 2 transmits information on its own configuration to the image supply device 1 (Configure Print Service). This information may include printable types, sizes of paper, special effects, etc.

Meanwhile, the image supply device 1 confirms whether the type of an image file to be printed is supported by the printing device 2 (Get Capability).

If the image file to be printed is supported by the printing device 2, first, information required for transmitting an ordering file 100 (i.e., information on an ordering file handle or an ordering file name) is transmitted to the printing device 2 (Start Job).

Then, by using the received information required for transmitting an ordering file, the printing device 2 receives the corresponding ordering file transmitted from the image supply device 1 (GetFile). By parsing the received ordering file, the printing device 2 extracts information (e.g., a file identifier) on an image file or a multimedia file to be printed for each print job, and based on the extracted information, receives the corresponding transmitted file (Get Partial File). Also, by parsing the source file of the corresponding print job, the printing device 2 confirms whether there is a linked file and, if so, extracts information on the linked file and receives the corresponding linked file based on the extracted information (Get Partial File). The received file is printed according to the print control information specified in the ordering file.

The process described above can be summarized as follows:
1) The image supply device 1 and the printing device 2 are connected through an interface such as a USB interface or a Bluetooth interface.
2) It is confirmed whether a direct printing service is supported between the two devices.
3) If the direct printing service is supported, the printing device 2 transmits supported print configuration information such as a printer model, file types, printable paper types and sizes, printing options and so on, to the image supply device 1.
4) The image supply device 1 receiving the print configuration information confirms whether the file type to be printed is supported by the printing device 1.
5) If the file type is supported, the image supply device 1 transmits an ordering file 100. If there are no restrictions in the transmission environment, the ordering file 100 can be transmitted through a variety of transmission methods, in addition to the USB or Bluetooth interface, for example, trivial file transfer protocol (TFTP), file transfer protocol (FTP), hypertext transfer protocol (HTTP), etc.
6) The printing device 2 parses the transmitted ordering file 100. The parsed information may include a print job order, a frequency, a source of each print job, printing option settings for each print job, information (e.g., a PTP file handle) required for receiving a file that is linked to a source file, etc.
7) Based on the parsed information, the printing device 2 performs print jobs by repeating the following process for each print job: a) receiving a source file (e.g., an image file or a multimedia file) to be printed; b) parsing the source file to be printed and forming a 1-page layout to be printed; c) fetching data required for the print job from the image supply device 1; d) after all data required for the print job is fetched, or while all the data is being fetched, extracting information to be printed and performing drawing in an appropriate location according to the page layout; e) until the 1-page print job is finished, repeating the process for data gathering, converting, and printing set forth in operations a) through d); and f) transmitting information on an error occurring during printing or information on a printing state to the image supply device 1. If there are no transmission restrictions, an ordinary transmission method such as TFTP, FTP, and HTTP can also be used, instead of transmission via the USB or Bluetooth interface.
8) When the series of print jobs described above is finished, the state of the printing result is reported to the image supply device 1 and the connection between the image supply device 1 and the printing device 2 is severed.

Meanwhile, when the direct printing service described above cannot be used, a batch printing service using a memory card can be employed. That is, as described above with reference to FIG. 6, an ordering file is generated, and the generated ordering file is recorded at a predetermined location in a detachable storage medium, such as a memory card. When the detachable storage medium is inserted into the printing device 2, the printing device 2 finds the ordering file, parses its content, and prints an image according to the parsed information.

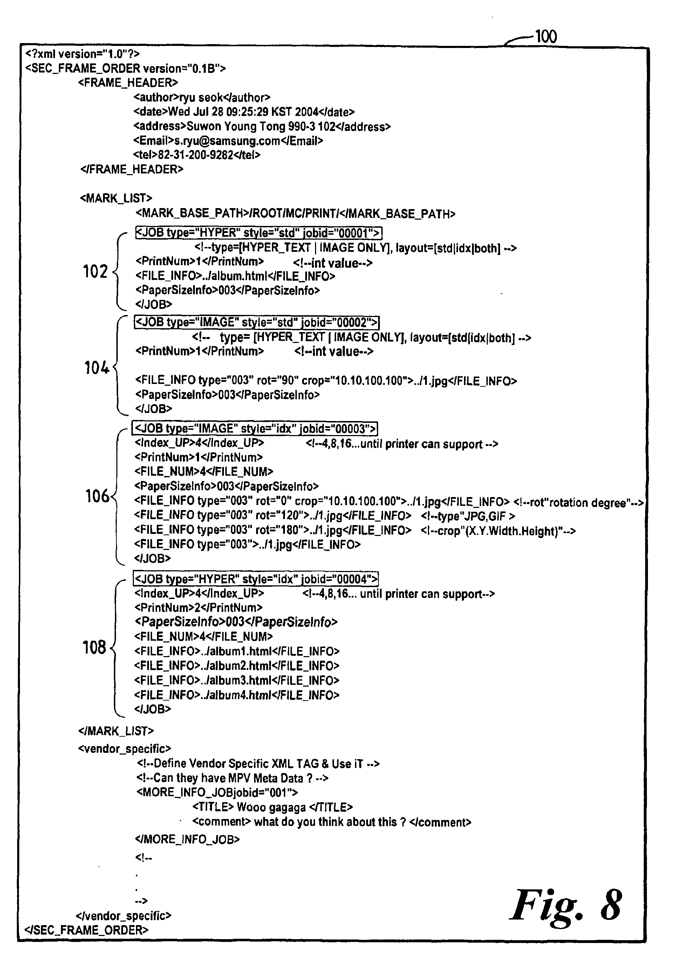

FIG. 8 illustrates an ordering file according to an exemplary embodiment of the present invention.

Referring to FIG. 8, an ordering file 100 according to the exemplary embodiment of the present invention is described by using a markup language such as XML. As shown in FIG. 8, the ordering file 100 includes print information specifying 1-page layout information in units of jobs, and information on a source file to be printed. Part 102 contains instructions to print a multimedia file named "album.html". Part 104 contains instructions to rotate an image file named "1.jpg" by 90 degrees, to crop the rotated image, and to print the result. Part 106 contains instructions to rotate image file "1.jpg" by 0 degrees, 120 degrees, and 180 degrees, and to print the resulting images in the form of an index. Part 108 contains instructions to print multimedia file "album.html" in the form of an index. Although not shown, a data area defined by a supplier (or a manufacturer) can also be included in the ordering file 100.

Thus, if an XML-based ordering format is used, a print job with a plurality of pages or only one page can be defined in one ordering file, and without the restriction of keywords, a variety of control information items can be expressed. Also, if an ordering file according to the exemplary embodiment of the present invention is used, hypertext files, as well as image files, can be printed in a variety of forms according to selected print control information. For example, a captured image may be combined with a birthday congratulatory message and printed in the form of a birthday card, or images may be combined with an address book in the form of text stored in a personal portable terminal and printed in the form of an address book containing photos. Thus, printing can be applied in a variety of ways.

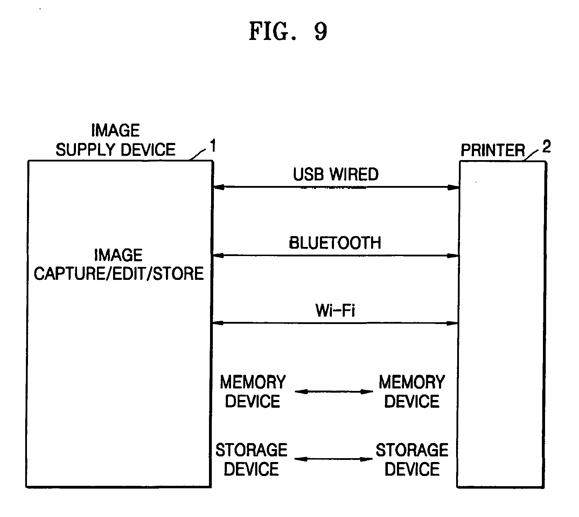

FIG. 9 illustrates an interface for printing an image file or a multimedia file according to an exemplary embodiment of the present invention.

Referring to FIG. 9, there are a variety of methods by which the above-described ordering file 100 according to the exemplary embodiment of the present invention is generated in the image supply device 1 and transferred to the printing device 2. For example, as shown in FIG. 9, a USB cable and the PictBridge standard are used so that print jobs can be performed page-by-page. Or, as described above with reference to FIG. 7, a print job performed in units of pages can be converted, the ordering file 100 can be transmitted, and a required source file or data can be transmitted and received by parsing the transmitted ordering file 100.

In a another exemplary method shown in FIG. 9, by using a Basic Printing Profile (BPP)/Basic Imaging Profile (BIP) standard supporting Bluetooth, a print job is performed in units of pages. The ordering file 100 may be transmitted by using an ordinary Bluetooth transmission channel, and a required source file or data can be transmitted and received by parsing the transmitted ordering file 100.

In yet another exemplary method shown in FIG. 9, when a connection is established through a Wi-Fi or wireless LAN, the ordering file 100 is transmitted, and a required source file or data can be transmitted and received by parsing the transmitted ordering file 100.

In still another exemplary method shown in FIG. 9, the ordering file 100 is recorded in a detachable storage medium such as a memory card or a USB stick in the image supply device 1, the ordering file 100 is read and parsed by inserting the detachable storage medium into the printing device 2, and a series of print jobs are performed based on the parsed information.

In another exemplary method shown in FIG. 9, if the image supply device 1 itself can be recognized as a USB storage device, the ordering file 100 is recorded in the image supply device 1, the recorded ordering file 100 is read and parsed by inserting the image supply device 1 directly into the printing device 2, and a series of print jobs are performed based on the parsed information.

As described above, the ordering file generated in the image supply device 1 can be transmitted or transferred to the printing device 2 via a variety of interfaces, and the transferred ordering file 1 is then parsed in the printing device 2 such that a defined print job can be performed.

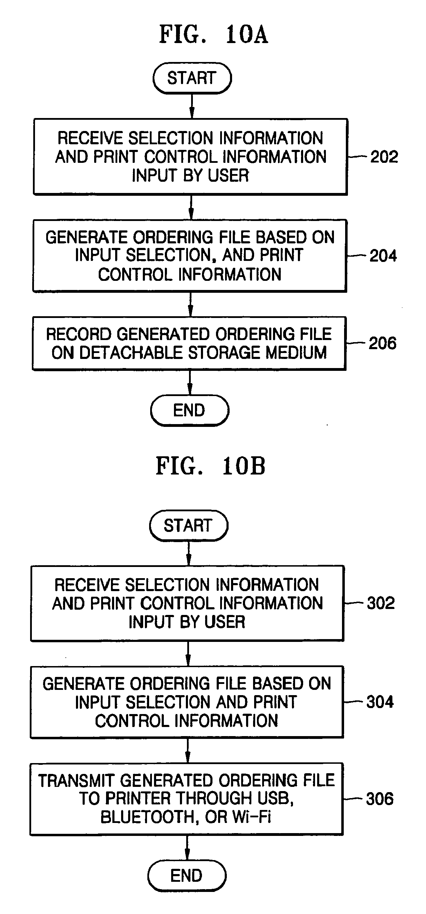

FIGS. 10A and 10B are flowcharts of methods of generating an ordering file according to exemplary embodiments of the present invention.

In FIG. 10A, a method of generating and/or transmitting an ordering file for a batch printing service is shown. First, an image supply device 1 receives selection information for selecting a source file (image file or multimedia file) to be printed and print control information input by a user through a user interface 10, in operation 202. The image supply device 1 generates an ordering file 100 defining a print job based on the input selection information and print control information, in operation 204. The generated ordering file 100 is recorded in a detachable storage medium 50 for batch printing service in operation 206. The detachable storage medium in which the ordering file 100 is recorded is inserted into a printing device 2 and parsed, and printing is performed as defined in the ordering file 100.

Meanwhile, FIG. 10B shows a method of generating and/or transmitting an ordering file for a direct printing service. Operations 302 and 304 for generating the ordering file 100 are the same as in the method of FIG. 10A. The generated ordering file 100 is transmitted to the printing device 2 through an interface such as a USB interface, a Bluetooth interface, or a Wi-Fi interface. The transmitted ordering file 100 is parsed by the printing device 2 and printing is performed as defined in the ordering file 100.

Meanwhile, the methods of generating an ordering file according to the exemplary embodiments of the present invention can be implemented as computer programs. Codes and code segments forming the programs can be easily inferred by programmers skilled in the technology field of the present invention. Also, the programs can be stored in computer-readable media and read and executed by a computer to implement the methods of generating an ordering file. Such computer-readable media include, for example, magnetic recording media, optical recording media, and carrier waves.

While the present invention has been particularly shown and described with reference to exemplary embodiments thereof, it will be understood by those of ordinary skill in the art that various changes in form and details may be made therein without departing from the spirit and scope of the present invention as defined by the following claims and their equivalents.

Consistent with the exemplary embodiments of the present invention as described above, a method by which a print ordering file for a captured image including multimedia data is generated and used to print the captured image, a printing system for printing the captured image including multimedia data by using the ordering file, and an image supply device and a printing device forming the printing system are provided.

According to an exemplary method, an XML-based ordering file defining a print job of a plurality of pages for direct printing or batch printing is generated, and the generated ordering file is transmitted or transferred in a variety of ways. Furthermore, an exemplary method of transmitting an ordering file capable of processing a multimedia file and style information as well as an image file is provided.

Accordingly, by using an ordering file, a series of print commands for a plurality of pages can be given as one command. This simplifies the process of sending a print command for each page as when the conventional USB or Bluetooth interface is used. This enables a quick switch to the main screen of an image supply device such that another job can be performed and utilization of a device can be enhanced.

Also, an image can be synthesized with a background, or a digital character, or multimedia data such as a PIMS can be printed together with an image, thus overcoming limits of conventional direct printing. Furthermore, by applying style information, a more precise printing result can be obtained.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A printing method comprising:
receiving selection information for selecting at least one file to be printed, from among at least one of image files and multimedia files, and print control information for a selected file to be printed;
generating an ordering file using a markup language based on the selection information and the print control information; and
transmitting the ordering file to a printing device through a predetermined interface.

2. The method of claim 1, further comprising parsing the ordering file which is transmitted and printing the selected file via the printing device.

3. The method of claim 1 or claim 2, wherein the selection information and the print control information is input by a user.

4. The method of any preceding claim, wherein the selected file is a multimedia file which is described by a markup language, which may be the same as or different from the markup language used for the ordering file.

5. The method of claim 4, wherein the multimedia file includes at least one of a linked image and style information.

6. The method of any preceding claim, wherein the ordering file is described by using elements and attributes complying with the markup language.

7. The method of any preceding claim, wherein the ordering file comprises mark information on the selected at least one file to be printed and print control information on a marked file.

8. The method of any preceding claim, wherein the print control information comprises at least one of information on a region of a screen to be printed, a number of prints, an image or style information linked to the selected file, a handle for transmitting the selected file, a size of an image to be printed, rotation information, color adjustment information, size adjustment information, centering information, resolution information, and print quality information.

9. The method of any preceding claim, wherein the predetermined interface is formed by inserting a universal serial bus (USB) storage device, as an image supply device, directly into the printing device.

10. The method of any preceding claim, wherein the predetermined interface is a detachable storage medium.

11. The method of claim 10, wherein the detachable storage medium is one of a memory stick and a memory card.

12. The method of any one of claims 1-8, wherein the predetermined interface is a wireless interface.

13. The method of claim 12, wherein the wireless interface is one of a Bluetooth interface and a Wi-Fi interface for a wireless local area network.

14. The method of any one of claims 1-8, wherein the predetermined interface is a universal serial bus (USB) interface using a USB cable.

15. An image supply device (1) comprising:
a user interface (10) which receives selection information for selecting at least one file to be printed from among at least one of image files and multimedia files, and print control information for a selected file to be printed, input by a user;
an ordering file generation unit (20) which generates an ordering file using a markup language based on the selection information and the print control information; and
a transmission unit (20) which transmits the ordering file to a printing device through a predetermined interface.

16. The device of claim 15, wherein the predetermined interface comprises at least one of an interface (10) which is formed by inserting a universal serial bus (USB) storage device, as an image supply device, directly into the printing device; a detachable storage medium (50); a wireless interface; and a USB interface using a USB cable.

17. The device of claim 16, wherein the detachable storage medium is one of a memory stick and a memory card.

18. The device of claim 16, wherein the wireless interface is one of a Bluetooth interface and a Wi-Fi interface for a wireless local area network.

19. A printing device comprising:
a reception unit which receives an ordering file including mark information on at least one of an image file and a multimedia file to be printed, and print control information for a marked file, from an image supply device through a predetermined interface; and
a print control unit which parses the ordering file and prints the marked file according to the print control information.

20. The device of claim 19, wherein the predetermined interface comprises at least one of an interface which is used by inserting a universal serial bus (USB) storage device, as an image supply device, directly into the printing device; a detachable storage medium; a wireless interface; and a USB interface using a USB cable.

21. The device of claim 20, wherein the detachable storage medium is one of a memory stick and a memory card.

22. The device of claim 20, wherein the wireless interface is one of a Bluetooth interface and a Wi-Fi interface for a wireless local area network.

23. A printing system for transmitting an image from an image supply device (1) to a printing device and printing the image, the printing system comprising:
a predetermined interface unit (10) which connects the image supply device and the printing device;
a transmission unit (30) which transmits an ordering file including mark information on at least one of an image file and a multimedia file to be printed, and print control information on a marked file, through the predetermined interface unit; and
a printing unit which parses the ordering file and prints the marked file according to the print control information.

24. The system of claim 23, wherein the predetermined interface unit (10) comprises at least one of an interface which is formed by inserting a universal serial bus (USB) storage device, as an image supply device, directly into the printing device; a detachable storage medium (56); a wireless interface; and a USB interface using a USB cable.

25. The system of claim 24, wherein the detachable storage medium is one of a memory stick and a memory card.

26. The system of claim 24, wherein the wireless interface is one of a Bluetooth interface and a Wi-Fi interface for a wireless local area network.
